# EUROPÄISCHE PATENTSCHRIFT

(11) **EP 1 259 443 B1**
(45) Veröffentlichungstag und Bekanntmachung des Hinweises auf die Patenterteilung: **05.11.2003**
(21) Anmeldenummer: 01929364.6
(22) Anmeldetag: 26.02.2001
(51) Int. Cl.: B65G 59/00

(54) **KOMMISSIONIERVORRICHTUNG MIT VERTIKALEN PRODUKTSPEICHERN UND UNTEREM FÖRDERBAND ODER DERGLEICHEN**
COMMISSIONING DEVICE WITH VERTICAL PRODUCT STORAGE UNITS AND LOWER CONVEYOR BELT OR SIMILAR
DISPOSITIF DE PREPARATION DES COMMANDES A L'AIDE DE CONTENANTS DE STOCKAGE VERTICAUX ET BANDE TRANSPORTEUSE INFERIEURE OU EQUIVALENT

(30) Priorität: 29.02.2000 DE 10009560
(43) Veröffentlichungstag der Anmeldung: 27.11.2002
(73) Patentinhaber: Knapp Logistik Automation Gesellschaft MBH, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: EP0102174
(87) Internationale Veröffentlichungsnummer: WO01064557

(56) Entgegenhaltungen:
- EP-A- 0 265 749
- EP-A- 0 960 836
- DE-U- 9 309 881
- DE-U- 20 003 757
- US-A- 2 780 342
- PATENT ABSTRACTS OF JAPAN vol. 010, no. 346 (M-537), 21. November 1986 (1986-11-21) & JP 61 145047 A (MUNEHARU FUKUMOTO), 2. Juli 1986 (1986-07-02)

## Beschreibung

Die Erfindung betrifft eine Kommissioniervorrichtung mit im wesentlichen vertikalen Produktspeichern, in denen Produkte jeweils gleicher Sorte gestapelt sind, und mit zumindest einem unter den Produktspeichern angeordneten Fördermittel, insbesondere Förderband, für den Abtransport von ausgewählten bzw. kommissionierten Produkten, wobei das stapelunterste Produkt eines ausgewählten Produktspeichers durch einen nach oben gerichteten Produktanschlag des Fördermittels aus dem Produktspeicher in Förderrichtung des sich bewegenden Fördermittels ausschiebbar und auf einem positionierten Produktfeld des Fördermittels ablegbar ist.

Eine Kommissioniervorrichtung der vorgenannten Art ist aus EP 0 960 836 A2 bekannt. Die Entnahme eines stapeluntersten Produkts erfolgt dadurch, daß der Produktspeicher bei einem kontinuierlich angetriebenen Förderband, welches oben voneinander beabstandete Produktanschläge aufweist, soweit abgesenkt wird, daß der vorbeifahrende Produktanschlag oder Stollen das unterste Produkt der Säule mitnimmt. Der Nachteil dieser Ausführungsform besteht darin, daß zum Ausschieben eines Produkts das Gewicht der gesamten Produktsäule bewegt werden muß, was einen aufwendigen Führungsmechanismus zur Folge hat.

Aufgabe der Erfindung ist die Schaffung einer Kommissioniervorrichtung der eingangs genannten Art, welche mit Hilfe einfacher Maßnahmen ein zuverlässiges und wirkungsvolles Kommissionieren von zumindest stapeluntersten Produkten eines ausgewählten Produktspeichers ermöglicht.

Diese Aufgabe wird durch den Gegenstand des unabhängigen Abspruch 1 gelöst. Vorteilhafte Ausgestaltungen ergeben sich aus den weiteren Ansprüchen.

Wesen der Erfindung ist, daß die Produktspeicher von der Fördermittelebene vorzugsweise gleich beabstandet darüber liegend angeordnet sind, wobei der Produktanschlag des sich bewegenden Fördermittels bei Nichtkommissionierung eines stapeluntersten Produkts frei unter dem Produktspeicher hindurchläuft und bei Kommissionierung durch Hebemittel für einen seitlichen Eingriff mit zumindest einem stapeluntersten Produkt angehoben wird. Es wird also nicht wie beim Stand der Technik der gesamte Produktspeicher mit seinem vollen Gewicht in Richtung Förderband bzw. Produktanschlag bewegt, um ein stapelunterstes Produkt aus dem Produktspeicher auszuschieben, sondern der Produktanschlag des sich bewegenden Fördermittels kurzzeitig angehoben. Der Produktanschlag kann mit oder ohne Fördermittel angehoben werden. In jedem Fall sind die sich bewegenden Massen gering, was ein schnelles Takten und mithin schnelles zuverlässiges Kommissionieren ermöglicht. Als sich bewegende Fördermittel kommen insbesondere Förderband, Gliederband, zwei Zahnriemen, Keilriemen oder Ketten in Frage. Die Vorteile des erfindungsgemäßen Systems liegen in der mechanischen Einfachheit sowie insbesondere in der Tatsache, daß durch das Mitnehmen der Produkte mit dem Anschlag bzw. Stollen die Produkte auf dem Fördermittel exakt positioniert zu liegen kommen, was z.B. günstig für eine automatische Etikettierung ist. Auch können in den auf dem Fördermittel zwischen zwei benachbarten von einander beabstandeten Produktanschlägen ohne zusätzlichen Aufwand Produktstapel gebildet werden.

Insbesondere ist vorgesehen, daß durch die Hebemittel das Fördermittel zusammen mit dem fest mit dem Fördermittel verbundenen Produktanschlag unmittelbar vor und nach dem zu kommissionierenden stapeluntersten Produkt eines Produktspeichers angehoben und nach einem Ausschieben wieder in die Fördermittelebene abgesenkt wird.

Die Hebemittel sind vorzugsweise ein getakteter vertikaler Hubantrieb, welcher unter dem Fördermittel im Bereich eines zugeordneten Produktspeichers vorgesehen und insbesondere pneumatisch oder elektrisch betrieben ist.

Die Hebemittel können auch eine schräge stationäre Rampe mit einem keilförmigen Hubkörper umfassen und unter dem Fördermittel im Bereich eines zugeordneten Produktspeichers vorgesehen sein, wobei der verschiebliche oder durch Rollen bewegliche Hubkörper längs der Rampe höhenverstellbar ist.

Alternativ kann grundsätzlich das Fördermittel zwar längsbeweglich, jedoch nicht höhenverstellbar sein, und gleichwohl ein Ausschieben eines stapeluntersten Produkts aus einem ausgewählten Produktspeicher dadurch erfolgen, daß durch Hebemittel der mit dem Fördermittel verbundene Produktanschlag ohne das Fördermittel unmittelbar vor und nach dem zu kommissionierenden stapeluntersten Produkt eines Produktspeichers angehoben und nach einem Ausschieben wieder in die Fördermittelebene abgesenkt wird.

In diesem Fall ist bevorzugt der Produktanschlag über einen zugbeanspruchten Fördermittel-Lappen mit dem Fördermittel verbunden, wobei der Produktanschlag über seitliche stationäre Rampen im Bereich des Fördermittel-Seitenrandes oder durch eine über dem Fördermittel am Produktspeicher angeordnete Einrichtung höhenverstellbar ist, wenn kommissioniert werden soll.

Die seitlichen Rampen besitzen zweckmäßigerweise jeweils eine verstellbare getaktete Weiche, welche bevorzugt ein seitenverschiebbares Rampenteil ist. Ist die Weiche inaktiv, kann eine Querverbindungstange des Produktanschlags in einer seitlichen Längsnut der seitlichen Rampen höhengleich mit dem Fördermittel in Förderrichtung bewegt werden. Ist die Weiche gestellt, ist die Längsnut durch Schieber versperrt, und es durchläuft die Querverbindungsstange entsprechend der Vorgabe der Rampensteigung, des Rampensattels und des Rampengefälles eine vorgegebene Höhenbahn und mithin auch entsprechend der Produktanschlag, der dann in einen seitlichen Eingriff mit einem stapeluntersten Produkt gelangt und dieses Produkt im Verlauf seiner Vorwärtsbewegung ausschiebt und auf dem Produktfeld vor dem Produktanschlag auf dem Fördermittel positioniert.

Anstelle eines vorzugsweise zentralen Produktanschlags können zwei gleich ausgebildete seitliche Produktanschläge für ein einziges stapelunterstes Produkt eines Produktspeichers vorgesehen sein, um in jedem Fall ein Verklemmen bei einem Ausschieben zuverlässig zu vermeiden.

Die Produktspeicher können in Förderrichtung des Fördermittels bezüglich der Vertikalen vorzugsweise geringfügig geneigt sein. Durch die Neigung wird der Ausschiebevorgang erleichtert.

Die Produktspeicher eines Fördermittels können in Reihe angeordnet und gleich beabstandet sein.

Insbesondere ist der Abstand der Produktspeicher kleiner als die Breite des Produktspeichers, um einen kompakten Aufbau einer Gesamtanlage einzurichten. Der Abstand zwischen zwei Produktspeichern kann durch ein Schutzblech überbrückt sein, um eine Verletzungsgefahr für eine Benutzungsperson zu minimieren. Ein sich vorwärts bewegender hoher Produktanschlag kann eventuell ein Sicherheitsrisiko darstellen.

Die Produktspeicher können auch quer zur Förderrichtung des Fördermittels bezüglich der Vertikalen vorzugsweise geringfügig geneigt sein.

Insbesondere kann vorgesehen sein, daß der Produktspeicher ein vertikales doppelt geneigtes Winkelblech mit einem Positionierwinkel für aufgenommene Produkte im Produktspeicher ist. In einem derartigen Speicher können dann auch unterschiedlich konfigurierte kubische Gegenstände ausgerichtet gestapelt und entsprechend zuverlässig gehandhabt, insbesondere ausgestoßen werden.

Die Produktspeicher können einen in Förderrichtung gelegenen seitlichen Auswurfschlitz für auszugebende Produkte besitzen, wobei die Schlitzbreite so bemessen oder in vertikaler Richtung breitenverstellbar sein kann, daß zwei oder mehrere gestapelte Produkte gleichzeitig als kleiner Produktstapel auf ein einziges Produktfeld des Fördermittels abgelegt werden kann. Es versteht sich, daß dann die Höhe des Produktanschlags entsprechend bemessen sein muß. Gegebenenfalls kann ein Produktanschlag auf zwei unterschiedlichen seitlichen Rampen oder auf einer einzigen seitlichen Rampe höhenbewegt werden, die dann zwei unterschiedlich hohe Weichen aufweist.

Insbesondere kann ein in vertikaler Richtung breiter Auswurfschlitz im Produktspeicher ausgebildet sein, der eine maximale Höhenerstreckung für ein gleichzeitiges Ausschieben von beispielsweise zwei oder drei Produkten aufweist, wobei im oberen Horizontalrandbereich des Auswurfschlitzes eine Bürste horizontal derart befestigt ist, daß die Borsten der Bürste sich nach unten erstrecken und unter der Oberkante des stapeluntersten Produkts des Produktspeichers endigen, und dadurch beim Kommissionieren ein nachfallendes Produkt zuverlässig zurückgehalten wird. Wird bei einer derartigen Ausgestaltung nur das stapelunterste Produkt kommissioniert, dann kann dieses Produkt praktisch frei nur mit geringer Borstenberührung mit dem Produktanschlag ausgeschoben werden. Werden zwei (oder drei) Produkte gleichzeitig kommissioniert, bei entsprechend hoher Eingriffslage des angehobenen Produktanschlags, dann wird das zweitunterste (und gegebenenfalls auch das drittunterste) Produkt des Produktstapels auch noch zusammen mit dem stapeluntersten Produkt aus dem Produktspeicher ausgeschoben. In diesem Fall werden die elastischen Borsten der Bürste durch das zweitunterste (und gegebenenfalls auch das drittunterste) Produkt beim Ausschieben entsprechend ausgelenkt. Es versteht sich, daß anstelle der Bürste ein anderes elastisches Glied, z. B. Blattfederzungen, vorgesehen sein kann, welches die gleiche Funktion erfüllt.

Anstelle der Bürste bzw. des elastischen Glieds kann auch ein Plattenschieber vorgesehen sein, der in einer hochgehobenen Stellung die gesamte vertikale Breite des Auswurfschlitzes frei gibt, so daß beispielweise zwei oder drei Produkte gleichzeitig ausgeschoben werden können. Soll nur das stapelunterste Produkt ausgeschoben bzw. kommissioniert werden, wird der höhenverstellbare Schieber entsprechend abgesenkt, um nur die Breite für das stapelunterste Produkt freizugeben. Der Plattenschieber wird hierbei, wie auch der Produktanschlag für dessen Höhenverstellung, durch eine elektronische Steuereinrichtung entsprechend angesteuert, die Teil der elektronischen Steuereinheit der Kommissioniervorrichtung ist.

Die Gesamtanlage einer Kommissioniervorrichtung kann je nach Kapazität, Einsatzzweck und örtlicher Gegebenheit unterschiedlich gestaltet sein. Insbesondere können mehrere Fördermittel mit zugeordneten Produktspeichern in gleichen und/oder unterschiedlichen Ebenen vorgesehen sein, deren Förderende mit einem Querförderband oder dergleichen in Verbindung stehen, wobei höhenüberbrückbare schräge Zwischenförderbänder oder dergleichen vorgesehen sein können.

In einem einzigen Produktfeld können vorzugsweise mehrere ausgeschobene Produkte gestapelt werden, die einem oder mehreren Produktspeichern entnommen worden sind.

Ein oder mehrere Produktspeicher können als quer zum Förderband verschiebliche Schubladen oder als Roll-Laden ausgebildet sein. Der Produktspeicher wird dann zum Befüllen seitlich herausgezogen. Über einen Sensor bzw. Taster wird die Schubladenposition abgefragt. Für die Zeit des Nachfüllens wird ein Ausschieben von der Produktspeichersteuerung verhindert. Wird in dieser Zeit ein Produkt aus dem gesperrten Produktspeicher benötigt, meldet die Produktspeichersteuerung den Fehler bzw. den Nachfüllvorgang an den Steuerrechner.

Die Schublade kann mehrere Produktspeicher nebeneinander beisitzen (Parallelkanäle). Während des Betriebs können die unbenutzte Produktspeicher befüllt werden. Durch Verschieben der Schublade wird dann ein voller Produktspeicher in die Ausschiebeposition gebracht, und der leere Produktspeicher kann wieder nachgefüllt werden. In diesem Fall muß das Ausschieben nur für die Dauer des Kanalwechsels verhindert werden. Durch ein automatisches oder manuelles Weiterschieben einer Lade mit mehreren Parallelkanälen kann bei gleicher Bauhöhe der Produktspeicher entsprechend vergrößert werden.

Bei der Erfindung befindet sich also im Produktspeicher ein Stapel von Produkten (Produktsäule). Die Produktspeicher sind jeweils vertikal oder geneigt (quer zur Förderrichtung) über einer unter dem Förderband (Gurt) befindlichen Hubvorrichtung angeordnet.

Die Stollen bzw. Produktanschläge besitzen so eine Höhe, daß sie bei eingefahrener Hubvorrichtung und bewegtem Band unter den Magazinen durchfahren können. Soll ein Produkt entnommen werden, wird bei bewegtem Band das Förderband in dem Moment angehoben, in dem sich ein Stollen unmittelbar vor der Vorderkante des Produktspeichers befindet. Das Förderband wird soweit angehoben, daß der Stollen das unterste Produkt der Produktsäule in Förderrichtung mitnimmt und dadurch aus dem Produktspeicher schiebt. Das ausgeschobene Produkt befindet sich dann auf dem Förderband in einem diskreten Feld, dessen Größe durch den Stollenabstand bestimmt ist.

Mit demselben Stollen können mehrere Produkte aus verschiedenen Produktspeichern ausgeschoben werden. Dadurch bildet sich eine Produktstapel, der am Ende des Förderbands übernommen werden kann.

Die Vorteile des Systems liegen in der mechanischen Einfachheit, der Tatsache, daß durch das Mitnehmen der Produkte mit dem Stollen die Produkte am Band exakt positioniert liegen (günstig für z.B. automatische Etikettierung), und ohne zusätzlichen Aufwand Produktstapel gebildet werden können.

Besonders im Bereich des E-Commerce, wo ein Auftrag im allgemeinen aus wenigen Produkten besteht, benötigt ein kompletter Auftrag nur ein Produktfenster, sofern die Höhe des Stapels nicht die Stollenhöhe überschreitet. Dadurch wird eine drastische Erhöhung des Systemdurchsatzes erreicht.

Das Anheben des Förderband, Gurts oder dergleichen kann auf viele Weisen erfolgen. Eine Möglichkeit ist, einen Kunststoffkeil über eine in der Fördertechnik versenkte Rampe zu schieben. Prinzipiell ist jede Methode zur Erzeugung einer Hubbewegung möglich (Hubmagnet, vertikal eingebauter Zylinder mit Rolle, seitlicher Zylinder mit Hubmechanik, etc.).

### Steuerung:

Der Steuerrechner erhält einen Auftrag, bestehend aus mehreren Produkten. Ist die Stapelhöhe geringer als die Stollenhöhe, kann der gesamte Auftrag in ein diskretes Feld (Produktfenster = Abstand zwischen zwei Stollen) gestapelt werden. Benötigt ein Auftrag mehrere Produktfenster, wird der Auftrag aufgeteilt. Durch die Anordnung der Produktspeicher mit Hubmechanismus über der Fördertechnik besitzt jeder Speicher einen definierten räumlichen Abstand zum Ende (in Förderrichtung) der Fördertechnik. Ein mit der Fördertechnik gekoppelter Impulsgeber liefert die Information über die Lage der Produktfenster. Zuerst werden die für einen Auftrag benötigten Produktfenster reserviert. Befindet sich das Produktfenster dann unter einem Produktspeicher, aus dem ein Produkt ausgeschoben werden soll, wird der betreffende Hubmechanismus aktiviert.

Um Platz zu sparen, werden mehrere Ebenen übereinander und/oder durch eine Kurve verbunden und/oder hintereinander, aber auch nebeneinander, angeordnet. Um nach einer Kurve wieder in ein Produktfenster zu treffen, muß die Geschwindigkeit der Förderbänder dieser Ebene gleich sein, und die Phasenlage der Produktfenster der Ebene zueinander konstant bleiben, d.h. konfigurierbar sein. Letztlich werden alle übereinander und hintereinander, eventuell auch nebeneinander liegenden Ebenen auf eine Strecke zusammengeführt. Um bei diesem Vorgang in die Produktfenster des Sammelbandes zu treffen, muß ebenfalls die Geschwindigkeit und Phasenlage der zusammenführenden Strecken konstant bzw. konfugierbar sein. Die Bandgleichlaufregelung ist nur im Falle von Kurven und zur Durchsatzoptimierung notwendig.

Alternativ kann das Anheben des Stollens auch über ein anderes Prinzip erfolgen. Statt das Förderband anzuheben, kann ein Förderband oder dergleichen mit auf der Transportseite angebrachten Lappen, Streifen, Plättchen oder ähnlichem eingesetzt werden. Die Lappen oder dergleichen werden quer zur Förderrichtung am Förderband befestigt und besitzen am losen Ende einen Stollen, der als Ausschieber fungiert. Zusammen mit dem Stollen wird ein Stab quer zur Förderrichtung montiert, der auf beiden Seiten über den Seitenrand des Förderbands vorsteht. Unter jedem Produktspeicher befindet sich auf beiden Seiten neben dem Förderband eine Rampe mit einer Weiche. Soll ein Produkt ausgeschoben werden, wird die Weiche aktiviert, sobald sich der zum Produktfenster gehörige Lappen unter dem Produktspeicher befindet. Die Produktspeicher sind in Förderrichtung geneigt. Zusätzlich können die Produktspeicher auch quer zur Förderrichtung geneigt sein, um ein einfaches Befüllen des Produktspeichers zu ermöglichen, da die Produkte durch die Schwerkraft automatisch an der Rückseite anliegen und die Vorderseite (quer zur Förderrichtung gesehen) offen gelassen werden kann. Der Stab am Ende des Lappens läuft auf die Rampe, und wird dadurch angehoben. Nach Überwindung der Steigung folgt ein Gefälle, das der Neigung des Produktspeichers entspricht. Der durch den Stab angehobene Noppen nimmt nun das unterste Produkt aus dem Produktspeicher mit. Die Neigung des Produktspeichers wird so gewählt, daß das ausgeschobene Produkt unter den folgenden Kanal geschobenen werden kann. Dadurch kann der Abstand zwischen aufeinandner folgenden Produktspeichern minimiert werden. Wird die Weiche nicht aktiviert, läuft der Stab entlang einer Nut unter der Rampe durch.

Denkbar ist auch eine Kombination der beiden Möglichkeiten:
Ein hoher Stollen mit einem Stab quer zur Förderrichtung wird uber eine Rampe nur soweit angehoben, daß die Oberkante des Stollens das unterste Produkt aus dem Produktspeicher ausschiebt. Die Möglichkeit, Stapel zu bilden, bleibt so erhalten. Die Rampe kann aber auch Bestandteil des Produktspeichers sein, und Fortsätze am Stollen werden benutzt, um diesen anzuheben.

### Gesamtsystem:

Das System kann aus mehreren übereinander liegenden Ebenen und nebeneinander liegenden Zeilen bestehen. Senkrecht zu den Zeilen wird eine Behälterfördertechnik angeordnet. Die Übergabe der Produkte am Ende der Fördertechnik erfolgt entweder direkt in jeder Ebene in davor wartende Behälter, oder es erfolgt eine Zusammenführung der Ebenen auf ein Niveau mit einer Übergabe der Produkte in Behälter auf einem Niveau.

Die Erfindung wird nachfolgend anhand von Ausführungsbeispielen unter Bezugnahme auf die beigefügte Zeichnung näher erläutert; es zeigen:
- Figur 1: eine schematische Darstellung einer erfindungsgemäßen Kommissioniervorrichtung mit Produktspeicher, Förderband und Produktanschlag im nicht betätigten Zustand bzw. bei Nichtkommission,
- Figur 2: die Kommissioniervorrichtung nach Figur 1 bei einem Kommissionieren,
- Figur 3: eine andere Kommissioniervorrichtung bei einer Nichtkommissionierung in einer Ansicht ähnlich Figur 1,
- Figur 4: die Kommissioniervorrichtung nach Figur 3 bei einem Kommissionieren,
- Figur 5: die Kommissioniervorrichtung nach Figur 1 in einer schematischen perspektivischen Ansicht,
- Figur 6: einen Produktspeicher der Kommissioniervorrichtung nach Figur 1 in größerer Einzelheit,
- Figur 7: eine Kommissioniervorrichtung in einer anderen Ausführungsform in einer schematischen, perspektivischen Ansicht, mit zentralem Produktanschlag, Lappen und seitlichen Rampen,
- Figur 8: die Ausführungsform nach Figur 7 gesehen von der Seite, mit einem Produktanschlag vor einem Produktspeicher,
- Figur 9: die Ausführungsform nach Figur 7 mit einem angehobenen, wirksamen Produktanschlag bei einer Kommissionierung,
- Figur 10: die Ausführungsform nach Figur 7 mit einem durchlaufenden, nicht wirksamen Produktanschlag bei einer Nichtkommissionierung,
- Figur 11: eine seitliche Rampe mit betätigter Weiche für eine Höhenverstellung des Produktanschlages bei einem Förderbandlauf,
- Figur 12: die seitliche Rampe nach Figur 11 bei nicht gestellter Weiche,
- Figur 13: eine schematische Anordnung einer Kommissioniervorrichtung mit drei nebeneinander liegenden Förderbändern in insgesamt drei Ebenen, gesehen in einer schematischen Draufsicht,
- Figur 14: die Anordnung nach Figur 13, gesehen in einer schematischen Seitenansicht, und
- Figur 15: eine Anordnung ähnlich Figur 14, mit einem Zwischenförderband zur Überbrückung unterschiedlicher Förderbandebenen und einem einzigen Querförderband für einen Abtransport von kommissionierten Produkten in Behältern.

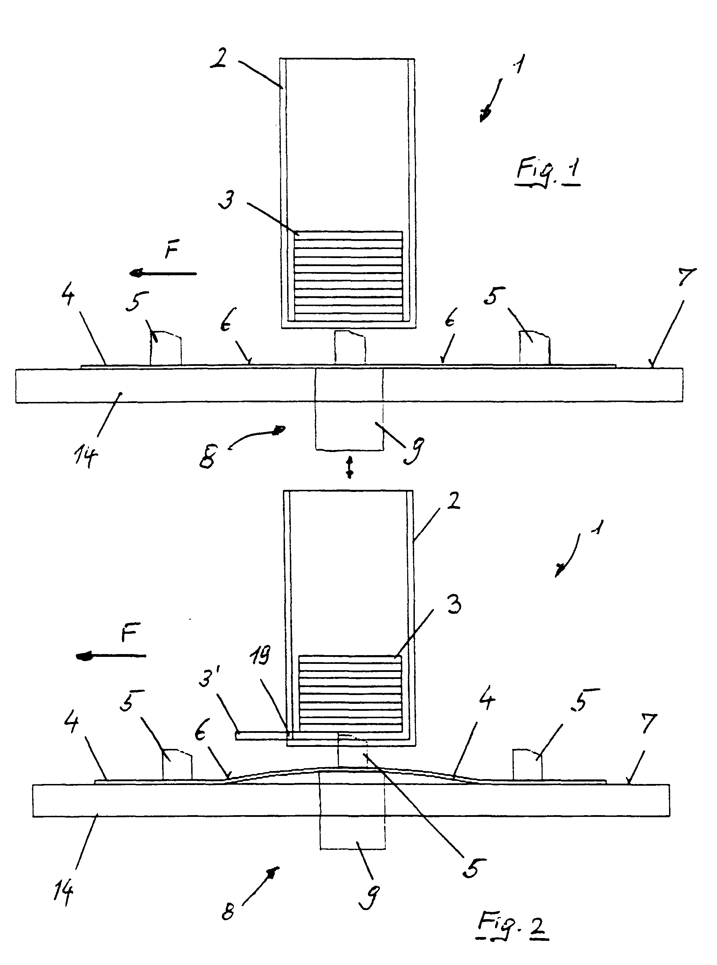

Gemäß den Figuren 1 und 2 umfaßt eine Kommissioniervorrichtung 1 vertikale Produktspeicher 2 (nur ein Produktspeicher aus Übersichtlichkeitsgründen veranschaulicht), in denen Produkte 3 jeweils gleicher Sorte gestapelt sind.

Die Produktspeicher 2 sind in der Kommissioniervorrichtung fest montiert und in Reihe längs eines Fördermittels in Form eines Förderbands 4 in jeweils gleichem Abstand angeordnet, wobei sich das Förderband 4 seinerseits in einem gleichen Abstand unter den Produktspeichern 2 befindet, welches für einen Abtransport von ausgewählten bzw. kommissionierten Produkten 3 vorgesehen ist.

Im besonderen kann jeweils das stapelunterste Produkt 3' eines ausgewählten Produktspeichers durch einen nach oben gerichteten Produktanschlag 5 des Förderbands 4 aus dem Produktspeicher in Förderrichtung F des sich bewegenden Förderbands ausgeschoben und auf einem positionierten Produktfeld 6 des Förderbands vor dem Produktanschlag 5 abgelegt werden, insbesondere dadurch, daß der Produktanschlag 5 des sich bewegenden Förderbands 4 bei Kommissionierung eines stapeluntersten Produkts 3' durch Hebemittel 8 für einen seitlichen Eingriff mit zumindest einem stapeluntersten Produkt 3' angehoben wird und dann als Mitnehmer fungiert. Soll bei einem Durchlauf des Produktanschlags 5 der Produktspeicher nicht angesteuert bzw. nicht kommissioniert werden, läuft der Produktanschlag ohne Anhebung in der Forderbandebene 7 frei unter dem Produktspeicher 2 hindurch. Das sich bewegende Förderband ist auf einer stationären Gleitunterlage 14 abgestutz.

Die Hebemittel 8 sind so angeordnet, daß das Förderband 4 zusammen mit dem fest mit dem Förderband verbundenen Produktanschlag 5 unmittelbar vor dem zu kommissionierenden stapeluntersten Produkt 3' eines Produktspeichers angehoben, dann in konstanter Höhe gehalten und nach einem Ausstoß des stapeluntersten Produkts 3' wieder in die Förderbandebene 7 abgesenkt wird, wie dies insbesondere aus der Figur 2 im Vergleich zu Figur 1 hervorgeht, bei der der Produktanschlag unwirksam unter dem beabstandeten Produktspeicher 2 hindurchläuft.

Die Hebemittel gemäß den Figuren 1 und 2 sind ein getakteter vertikaler Hubantrieb 9, welcher unter dem Förderband 4 im Bereich eines zugeordneten Produktspeichers 2 vorgesehen und vorzugsweise pneumatisch oder elektrisch betrieben ist.

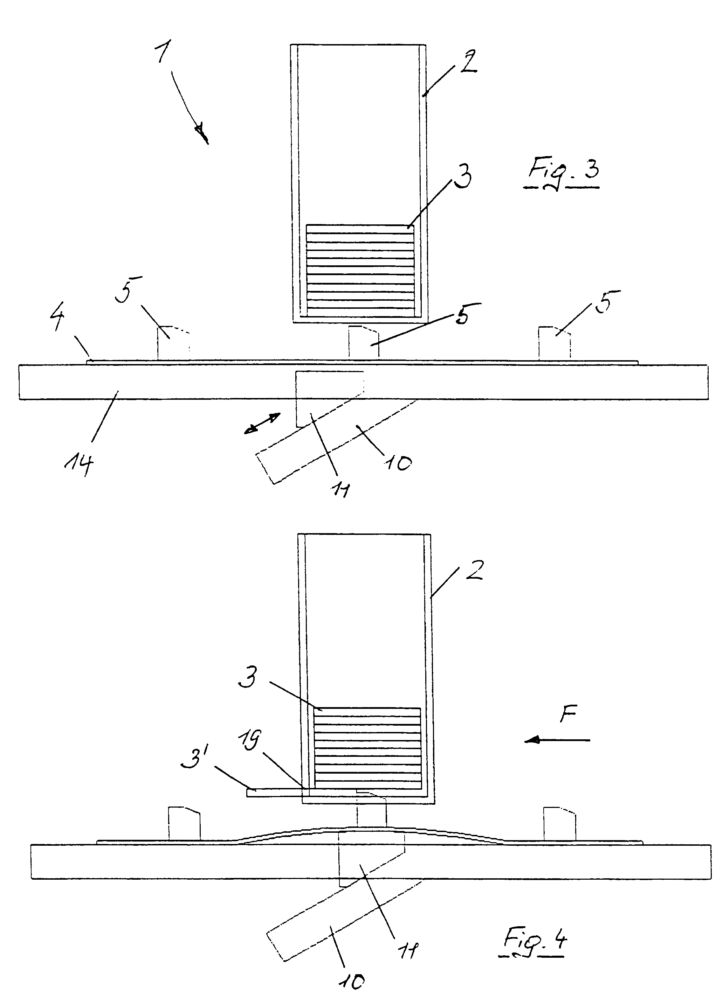

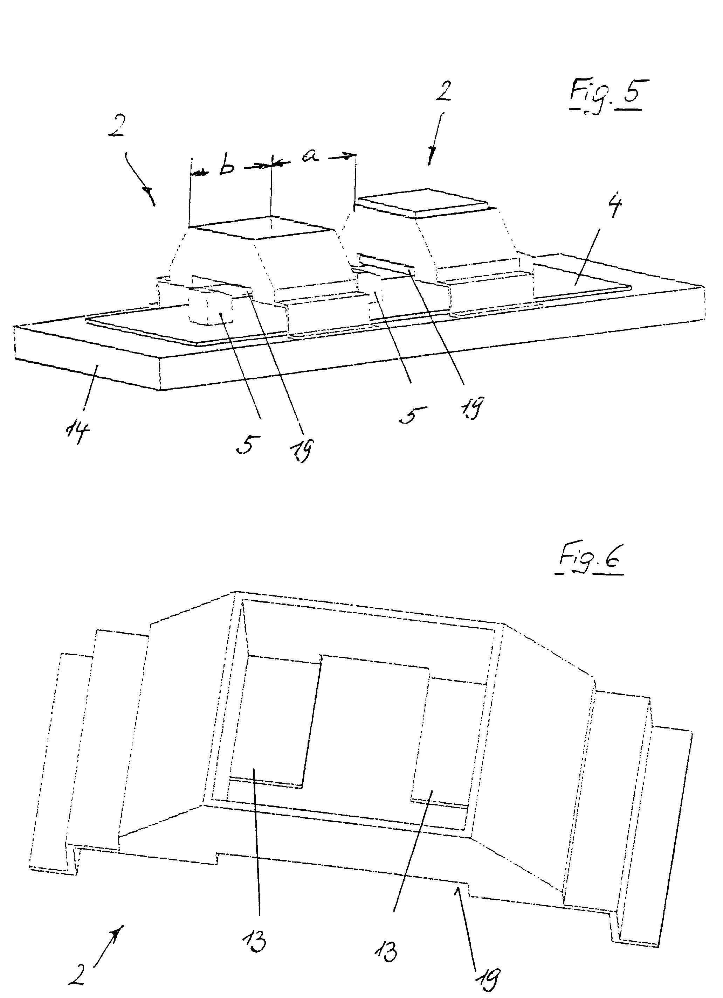

In den Figuren 3 und 4 sind andere Hebemittel in Form einer schrägen Rampe 10 mit einem keilförmigen Hubkörper 11 vorgesehen, welche unter dem Förderband 4 im Bereich eines zugeordneten Produktspeichers 2 vorgesehen sind, wobei der verschiebliche oder durch Rollen bewegliche Hubkörper 11 längs der Rampe 10 höhenverstellbar ist, um den Produktanschlag einschließlich Förderband lokal anzuheben, wenn kommissioniert werden soll.

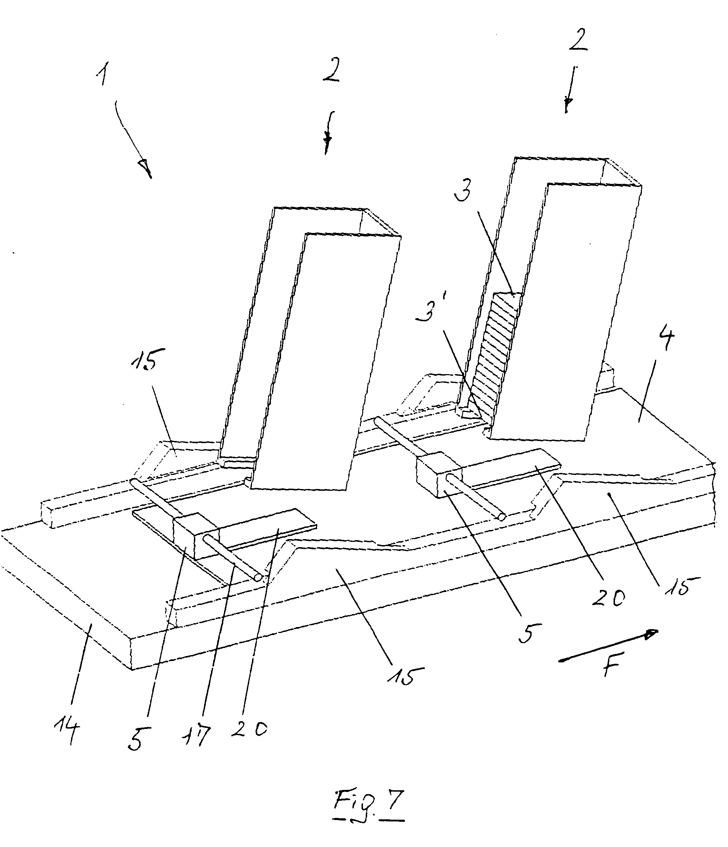

Die Produktspeicher 2 gemäß den Figuren 1 bis 4 sind gemäß den Figuren 5 und 6 oben offene Behältnisse mit quadratischer horizontaler Aufnahme. Die Produkte 3 sind gemäß Ausführungsbeispiel Tonträger (CD's) in verschweißten flachen Kassetten, die aufeinander gestapelt im Produktspeicher angeordnet sind. Der Boden der Produktspeicher ist mittig offen. Die CD's werden durch seitliche Produktauflagen 13 im Produktspeicher bodenseitig abgestützt. Der Abstand zwischen zwei benachbarten Produktanschlägen 5 entspricht in etwa der Kantenlänge einer Kassette mit aufgenommener CD.

Entspricht - was besonders vorteilhaft ist - die Länge der Produktauflage im Produktspeicher nur zwei Drittel der Speicherbreite, während das restliche ausgangsseitige Drittel bodenseitig ausgespart ist, kann der Abstand zwischen aufeinanderfolgenden Produktspeichern auf zwei Drittel der Produktspeicherbreite reduziert werden, da dann ein Produkt beim Ausschieben aus dem Produktspeicher gerade noch ohne Berührung des benachbarten Produktspeichers auf das Produktfeld des Förderbands fallen kann, d.h. schon ein Drittel früher, als wenn die Produktauflage die gesamte Speicherbreite einnimmt.

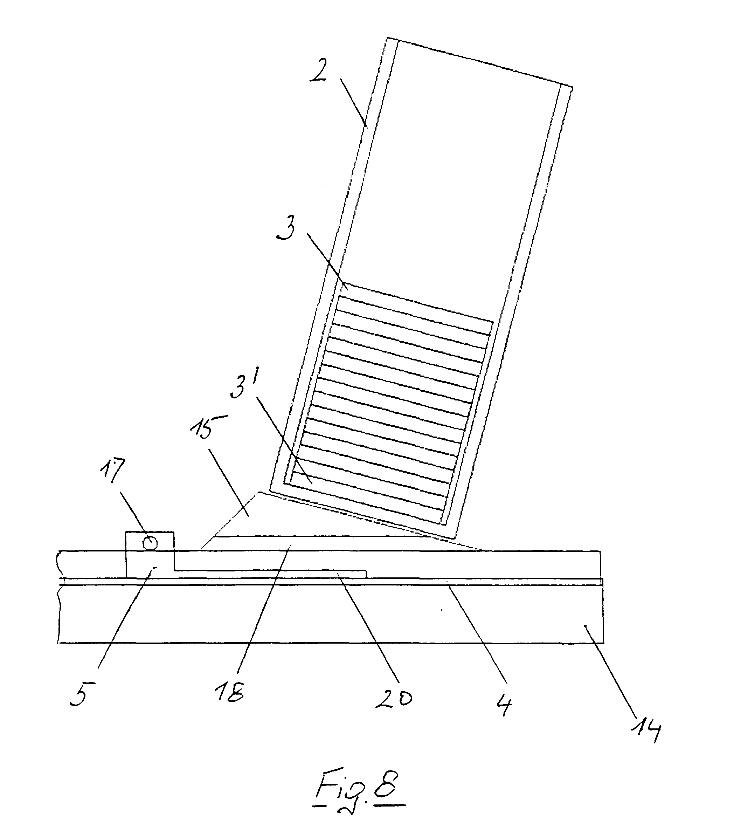

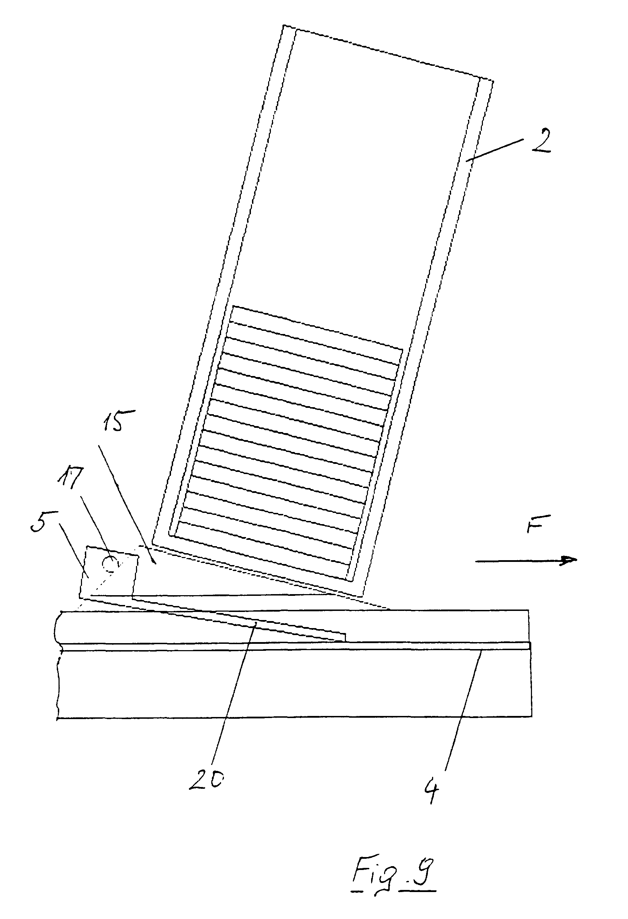

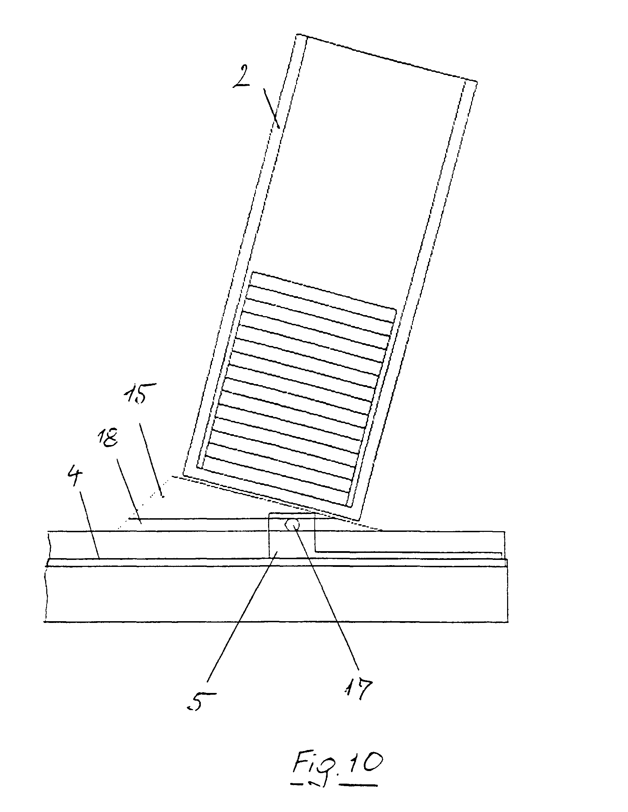

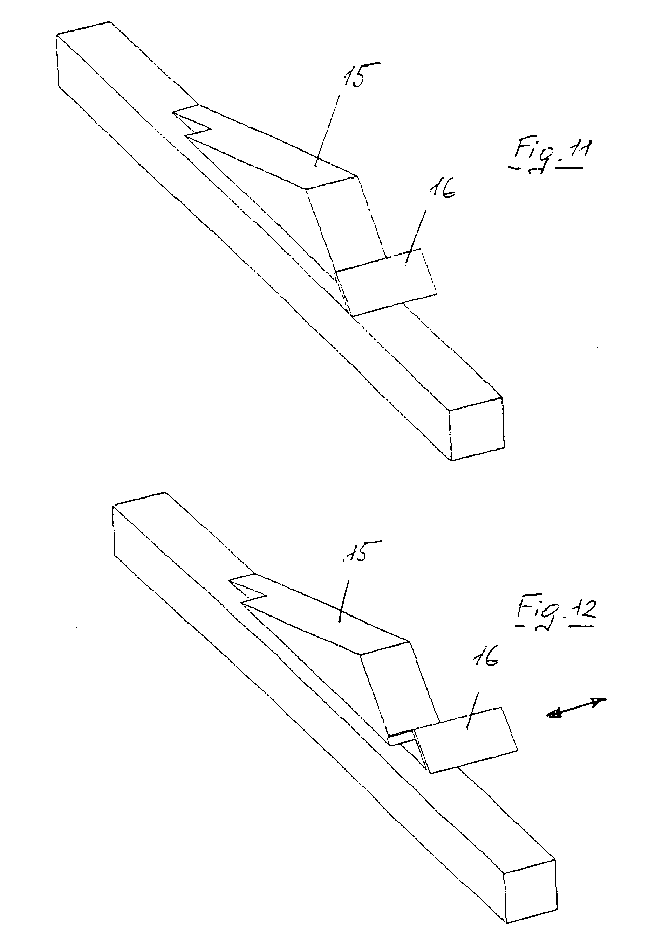

In den Figuren 7 bis 12 ist ein Ausführungsform einer Kommissioniervorrichtung 1 dargestellt, bei der durch Hebemittel der mit dem Förderband 4 verbundene Produktanschlag 5 ohne das Förderband unmittelbar vor und nach dem zu kommissionierenden stapeluntersten Produkt 3' eines Produktspeichers 2 angehoben bzw. wieder in die Förderbandebene 7 abgesenkt wird. Insbesondere ist jeder Produktanschlag 5 über einen zugbeanspruchten Förderbandlappen 20 mit dem Förderband 4 verbunden, wobei der Produktanschlag 5 über seitliche stationäre Rampen 15 im Bereich des Förderband-Seitenrandes höhenverstellbar ist. Im besonderen besitzt jeder in der Mitte des Förderbands angeordnete Produktanschlag 5 eine quer zum Förderband angeordnete feste Stange 17, deren seitliche Enden für ein Anheben der Stange einschließlich Produktanschlag 5 über die gleich konfigurierten seitlichen Rampen 15 laufen und dann als Mitnehmer für ein stapelunterstes Produkt 3' fungieren und das Produkt auf diese Weise ausschieben. Die seitlichen Rampen 15 besitzen jeweils eine verstellbare getaktete Weiche 16 gemäß den Figuren 11 und 12, welche ein seitenverschiebbares Rampenteil ist. Befindet sich die Weiche in ihrer aktiven Stellung gemäß Figur 11, fungiert sie als Rampe: Die Stange 17 des Produktanschlags 5 durchläuft die hochgehobene Rampenbahn. Befindet sich die Weiche in ihrer inaktiven Stellung gemäß Figur 12, ist die seitliche Nut 18 jeder seitlichen Rampe durchgeschaltet: Die Stange 17 durchläuft ohne Höhenanhebung jede seitliche Nut 18. Entsprechend verbleibt auch der Produktanschlag 5 in seiner förderbandnahen Basisstellung. Das stapelunterste Produkt wird dann gemäß Figur 10 nicht ausgeschoben.

Im Ausführungsbeispiel nach den Figuren 7 bis 12 sind die Produktspeicher 2 in Förderrichtung F des Förderbands 4 leicht zur Vertikalen geneigt, um den Ausschiebevorgang eines stapeluntersten Produkts zu erleichtern. Die Neigung kann vorzugsweise so gewählt werden, daß beim Ausschieben eines Produkts die Produkt-Oberkante unter der Produktspeicher-Unterkante des nachfolgenden Produktspeichers liegt. Das Produkt wird also unter den nachfolgenden Produktspeicher geschoben. Der Abstand der Produktspeicher ergibt sich dann aus dem Platzbedarf für den aufsteigenden Teil der Rampe.

Es können anstelle eines zentralen Produktanschlags zwei gleich ausgebildete seitliche Produktanschläge 5 für ein einziges stapelunterstes Produkt 3' eines Produktspeichers 2 vorgesehen sein, ohne daß dann eine Gefahr einer Verklemmung beim Ausschiebevorgang besteht.

Die Produktspeicher 2 eines Förderbands 4 sind vornehmlich in Reihe angeordnet und gleich voneinander beabstandet, wobei der Abstand a der Produktspeicher 2 kleiner als die Breite b des Produktspeichers ist.

Die Produktspeicher 2 können auch quer zur Förderrichtung F des Förderbands 4 bezüglich der Vertikalen geringfügig geneigt sein und insbesondere ein vertikales doppelt geneigtes Winkelblech mit einem Positionierwinkel für aufgenommene Produkte 3 im Produktspeicher 2 sein, so daß auch unterschiedlich konfiguriert kubische Produkte im Winkel ausgerichtet und zuverlässig gestapelt werden können. Entsprechend der Neigungen sind auch die bodenseitigen Produktanschläge für ein Kommissionieren geführt.

Die Produktspeicher 2 besitzen einen in Förderrichtung F gelegenen seitlichen Auswurfschlitz 19 für auszugebende Produkte 3', welcher auch breitenverstellbar sein kann, um zumindest zwei gestapelte Produkte gleichzeitig auszuschieben, sofern die Höhe des Produktanschlags entsprechend gestaltet ist oder zwei unterschiedlich hohe Rampen für ein einstückiges Ausschieben und ein zweistückiges Ausschieben von Produkten vorgesehen sind.

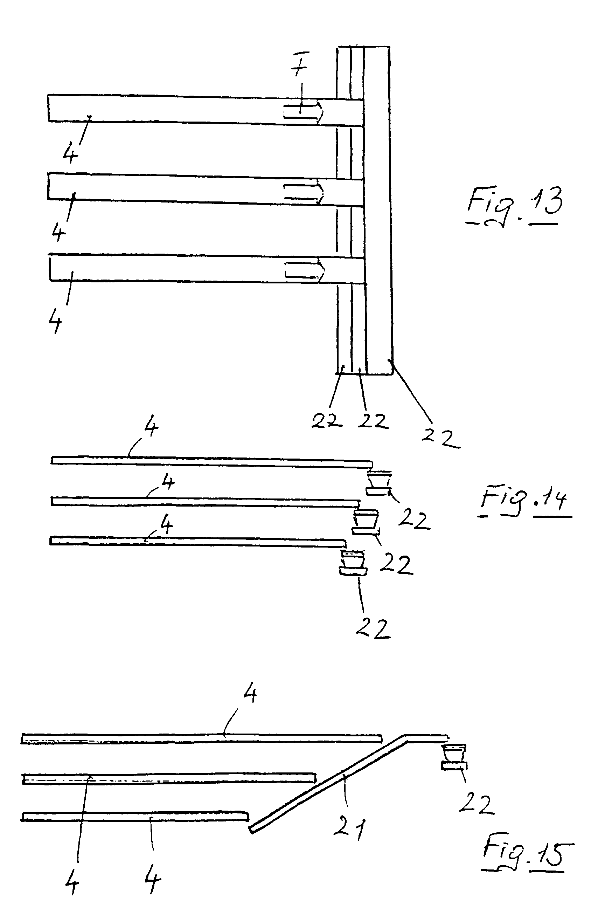

Gemäß den Figuren 13, 14 und 15 sind mehrere Förderbänder 4 mit zugeordneten Produktspeichern 2 in gleichen und/oder unterschiedlichen Ebenen vorgesehen, deren Förderende mit einem Querförderband 22 in Verbindung steht, wobei höhenüberbrückbare schräge Zwischenförderbänder 21 vorgesehen sein können.

## Patentansprüche

1. Kommissioniervorrichtung (1) mit im wesentlichen vertikalen Produktspeichern (2), in denen Produkte (3) jeweils gleicher Sorte gestapelt sind, und mit zumindest einem unter den Produktspeichern angeordneten Fördermittel (4), insbesondere Förderband, für den Abtransport von ausgewählten bzw. kommissionierten Produkten, wobei das stapelunterste Produkt (3') eines ausgewählten Produktspeichers durch einen nach oben gerichteten Produktanschlag (5) des Fördermittels aus dem Produktspeicher in Förderrichtung (F) des sich bewegenden Fördermittels ausschiebbar und auf einem positionierten Produktfeld (6) des Fördermittels ablegbar ist,
die Produktspeicher von der Fördermittelebene (7) vorzugsweise gleich beabstandet darüber liegend angeordnet sind, wobei der Produktanschlag (5) des sich bewegenden Fördermittels(4) bei Nichtkommissionierung eines stapeluntersten Produkts (3') frei unter dem Produktspeicher (2) hindurchläuft
**dadurch gekennzeichnet,**
**daß** der Produktanschlag (5) bei Kommissionierung durch Hebemittel (8) für einen seitlichen Eingriff mit zumindest einem stapeluntersten Produkt (3') kurzzeitig angehoben wird.

2. Kommissioniervorrichtung nach Anspruch 1,
**dadurch gekennzeichnet,**
**daß** durch die Hebemittel (8) das Fördermittel(4) zusammen mit dem fest mit dem Fördermittel verbundenen Produktanschlag (5) unmittelbar vor und nach dem zu kommissionierenden stapeluntersten Produkt (3') eines Produktspeichers angehoben bzw. wieder in die Fördermittelebene (7) abgesenkt wird.

3. Kommissioniervorrichtung nach Anspruch 2,
**dadurch gekennzeichnet,**
**daß** die Hebemittel ein getakteter vertikaler Hubantrieb (9) sind, welcher unter dem Fördermittel(4) im Bereich eines zugeordneten Produktspeichers (2) vorgesehen und vorzugsweise pneumatisch oder elektrisch betrieben ist.

4. Kommissioniervorrichtung nach Anspruch 3,
**dadurch gekennzeichnet,**
**daß** die Hebemittel eine schräge Rampe (10) mit einem keilförmigen Hubkörper (11) umfassen, welche unter dem Förderband (4) im Bereich eines zugeordneten Produktspeichers (2) vorgesehen sind, wobei der verschiebliche oder durch Rollen bewegliche Hubkörper (11) längs der Rampe (10) höhenverstellbar ist.

5. Kommissioniervorrichtung nach Anspruch 1,
**dadurch gekennzeichnet,**
**daß** durch die Hebemittel (8) der mit dem Fördermittel(4) verbundene Produktanschlag (5) ohne das Fördermittel unmittelbar vor und nach dem zu kommissionierenden stapeluntersten Produkt (3') eines Produktspeichers (2) angehoben bzw. wieder in die Förderbandmittel (7) abgesenkt wird.

6. Kommissioniervorrichtung nach Anspruch 5,
**dadurch gekennzeichnet,**
**daß** der Produktanschlag (5) über einen vorzugsweise zugbeanspruchten Fördermittel-Lappen (20) mit dem Fördermittel (4) verbunden ist, wobei der Produktanschlag (5) über seitliche stationäre Rampen (15) im Bereich des Fördermittel-Seitenrandes oder durch eine über dem Fördermittel am Produktspeicher angeordnete Einrichtung höhenverstellbar ist.

7. Kommissioniervorrichtung nach Anspruch 6,
**dadurch gekennzeichnet,**
**daß** die seitlichen Rampen (15) jeweils eine verstellbare getaktete Weiche (16) besitzen, welche bevorzugt ein seitenverschiebbares Rampenteil ist.

8. Kommissioniervorrichtung nach einem der Ansprüche 1 bis 7,
**dadurch gekennzeichnet,**
**daß** zwei gleich ausgebildete seitliche Produktanschläge (5) für ein einziges stapelunterstes Produkt (3') eines Produktspeichers (2) vorgesehen sind.

9. Kommissioniervorrichtung nach einem der Ansprüche 1 bis 8,
**dadurch gekennzeichnet,**
**daß** die Produktspeicher (2) in Förderrichtung (F) des Fördermittels (4) bezüglich der Vertikalen geneigt sind.

10. Kommissioniervorrichtung nach einem der Ansprüche 1 bis 9,
**dadurch gekennzeichnet,**
**daß** die Produktspeicher (2) eines Fördermittels (4) gleich beabstandet in Reihe angeordnet sind und/oder der Abstand (a) der Produktspeicher (2) kleiner als die Breite (b) des Produktspeichers ist.

11. Kommissioniervorrichtung nach einem der Ansprüche 1 bis 10,
**dadurch gekennzeichnet,**
**daß** die Produktspeicher (2) quer zur Förderrichtung (F) des Fördermittels (4) bezüglich der Vertikalen geneigt sind.

12. Kommissioniervorrichtung nach Anspruch 11,
**dadurch gekennzeichnet,**
**daß** der Produktspeicher (2) ein vertikales doppelt geneigtes Winkelblech mit einem Positionierwinkel für aufgenommene Produkte (3) im Produktspeicher (2) ist.

13. Kommissioniervorrichtung nach einem der Ansprüche 1 bis 12,
**dadurch gekennzeichnet,**
**daß** die Produktspeicher (2) einen in Förderrichtung (F) gelegenen seitlichen Auswurfschlitz (19) für auszugebende Produkte (3') besitzen.

14. Kommissioniervorrichtung nach Anspruch 13,
**dadurch gekennzeichnet,**
**daß** für einen gleichzeitigen Auswurf von zumindest zwei gestapelten Produkten aus einem einzigen Produktspeicher (2) der seitliche Auswurfschlitz (19) in vertikaler Richtung breitenverstellbar, mit einer oberseitigen Bürste versehen oder mit einem oberseitigen, nach unten verstellbaren Plattenschieber versehen ist.

15. Kommissioniervorrichtung nach einem der Ansprüche 1 bis 14,
**dadurch gekennzeichnet,**
**daß** mehrere Fördermittel (4) mit zugeordneten Produktspeichern (2) in gleichen und/oder unterschiedlichen Ebenen vorgesehen sind, deren Förderende mit Querfördermitteln, insbesondere Querförderbändern (22), in Verbindung stehen, wobei höhenüberbrückbare schräge Zwischenfördermittel, insbesondere Zwischenförderbänder (21), vorgesehen sein können.

16. Kommissioniervorrichtung nach einem der Ansprüche 1 bis 15,
**dadurch gekennzeichnet,**
**daß** ein oder mehrere Produktspeicher (2) als quer zum Fördermittel(4) verschiebliche Schublade oder Roll-Lade ausgebildet sind.

17. Kommissioniervorrichtung nach einem der Ansprüche 1 bis 16,
**dadurch gekennzeichnet,**
**daß** in einem einzigen Produktfeld (6) mehrere ausgeschobene Produkte (3') eines oder mehrerer Produktspeicher (2) stapelbar sind.

## Claims

1. A commissioner (1) having substantially vertical magazines (2) in which products (3) of the same kind are stacked, and having at least one conveying device (4), in particular a conveyor belt, disposed beneath the magazine and designed for the removal of selected or order-picked products, in which the lowermost product (3') of a selected magazine can be pushed out from the magazine in the direction of transport (F) of the moving conveying means by an upwardly directed product entrainer (5) of the conveying means and can be placed on a positioned product area (6) of the conveying device, the magazines being disposed above the conveying device preferably at equal distances from the plane of the conveying device (4), whilst the product entrainer (5) of the moving conveying device (4) moves freely past und below the magazine (2) when the lowermost product (3') is not to be order-picked,
**characterised in that** the product entrainer (5) is, for the purpose of order-picking, raised for a short period by lifting means (8) to effect lateral engagement of at least one lowermost product (3').

2. A commissioner as defined in claim 1,
**characterised in that** by means of said lifting means (8) the conveying means (4) are raised, together with the product entrainer (5) fixed to the conveying means, just prior to reaching the desired lowermost product (3') of a magazine for order-picking thereof and are re-lowered to the plane of the conveying means (7) after passing said magazine.

3. A commissioner as defined in claim 2,
**characterised in that** the lifting means comprise a clocked vertical piston drive (9), which is provided below the conveying means (4) in the region of an assigned magazine (2) and is preferably driven by pneumatic or electrical means.

4. A commissioner as defined in claim 3,
**characterised in that** the lifting means comprise a ramp (10) having a wedge-shaped piston element (11), which is provided below the conveyor belt (4) in the region of an assigned magazine (2), the piston element (11) being displaceable or movable on rollers so as to be vertically adjustable along said ramp (10).

5. A commissioner as defined in claim 1,
**characterised in that** the product entrainer (5) connected to the conveying means (4) is raised, by means of the lifting means (8) and separately from the conveying means, directly prior to reaching the lowermost product (3') of a magazine (2) to be order-picked and is re-lowered by said lifting means (8) into the conveyer device (7) on passing said lowermost product.

6. A commissioner as defined in claim 5,
**characterised in that** the product entrainer (5) is linked to the conveying means (4) via a preferably tensioned conveyor flap (20), the product entrainer (5) being vertically adjustable by way of lateral stationary platforms (15) in the marginal region of the conveyor or by means of a contrivance disposed above the conveying means on the magazine.

7. A commissioner as defined in claim 6,
**characterised in that** the lateral ramps (15) each possess variable clocked switching means (16) preferably comprising a laterally displaceable part of the ramp.

8. A commissioner as defined in any one of claims 1 to 7,
**characterised in that** two identically designed lateral entrainers (5) are provided for a single lowermost product (3') of a magazine (2).

9. A commissioner as defined in any one of claims 1 to 8,
**characterised in that** the magazine (2) is vertically inclined in the direction of transport (F) of the conveying means (4).

10. A commissioner as defined in any one of claims 1 to 9,
**characterised in that** the magazines (2) of the conveying means (4) are equally spaced in a row and/or the distance (a) between the magazines (2) is less than the width (b) of the magazine.

11. A commissioner as defined in any one of claims 1 to 10,
**characterised in that** the magazines (2) are vertically inclined at right angles to the direction of transport (F) of the conveying means (4).

12. A commissioner as defined in claim 11,
**characterised in that** the magazine (2) is a vertical doubly inclined piece of angle sheet iron having a locating angle for products (3) disposed in the magazine (2).

13. A commissioner as defined in any one of claims 1 to 12,
**characterised in that** the magazines (2) possess a lateral ejection slot (19) disposed in the direction of transport (F) for products to be dispensed (3').

14. A commissioner as defined in claim 13,
**characterised in that** for simultaneous ejection of at least two stacked products from a single magazine (2), the lateral ejection slot (19) is width-adjustable in the vertical direction and is provided at the top with a brush or with a downwardly adjustable plate mover.

15. A commissioner as defined in any one of claims 1 to 14,
**characterised in that** a number of conveying devices (4) and associated magazines (2) are provided in the same and/or different planes, the ends of the conveyors being connected with transverse conveying means, particularly transverse conveyor belts (22), whilst there can be provided height-compensating sloping intermediate conveying means, particularly intermediate conveyor belts (21).

16. A commissioner as defined in any one of claims 1 to 15,
**characterised in that** one or more magazines (2) are in the form of drawers or roller shutters displaceable at right angles to the conveying means (4).

17. A commissioner as defined in any one of claims 1 to 16,
**characterised in that** a number of products (3') ejected from one or more magazines (2) can be stacked in a single product area (6).

## Revendications

1. Dispositif d'approvisionnement (1) avec des réservoirs de produit (2) essentiellement verticaux dans lesquels réservoirs des produits (3) à chaque fois de même type sont empilés et avec au moins un moyen de transport (4) disposé sous les réservoirs de produit, notamment une bande de transport, pour l'enlèvement de produits sélectionnés ou à approvisionner ; le dernier produit (3') en bas de la pile d'un réservoir sélectionné de produit étant susceptible d'être sorti par glissement au moyen d'une butée du moyen de transport orienté vers le haut hors du réservoir de produit en direction de transport (F) du moyen de transport se déplaçant et étant susceptible d'être déposé sur un champ de produit (6) du moyen de transport ; les réservoirs de produit étant disposés au dessus à une distance de préférence identique du plan du moyen de transport (7) ; la butée de produit (5) du moyen de transport (4) en déplacement traversant librement sous le réservoir de produit (2) lors d'une absence d'approvisionnement d'un dernier produit (3') en bas de la pile,
**caractérisé en ce que** la butée de produit est (5) levée brièvement par des moyens de levage (8), lors de l'approvisionnement, pour saisir latéralement au moins un dernier produit en bas de la pile (3').

2. Dispositif d'approvisionnement selon la revendication 1,
**caractérisé en ce que** le moyen de transport (4) est levé par les moyens de levage (8) ou baissé à nouveau vers le plan (7) des moyens de transport, ensemble avec la butée de produit (5) liée fixement au moyen de transport, directement avant ou après le dernier produit (3') à approvisionner, situé en bas de pile.

3. Dispositif d'approvisionnement selon la revendication 2,
**caractérisé en ce que** les moyens de levage consistent en un entraînement de levage (9) vertical cadencé qui est prévu sous le moyen de transport (4) dans la zone d'un réservoir de produit (2) associé et qui est actionné de préférence de façon pneumatique ou électrique.

4. Dispositif d'approvisionnement selon la revendication 3,
**caractérisé en ce que** les moyens de levage comportent une rampe inclinée (10) avec corps de levage (11) en forme de cale qui est prévu sous la bande de transport (4) dans la zone d'un réservoir de produit (2) associé ; le corps de levage (11), susceptible d'être déplacé ou bougé au moyens de rouleau, pouvant être réglé en hauteur le long de la rampe (10).

5. Dispositif d'approvisionnement selon la revendication 1,
**caractérisé en ce que** la butée de produit (5), liée au moyen de transport (4) est levé par les moyens de levage (8) ou baissé à nouveau vers le plan (7) des moyens de transport sans le moyen de transport; directement avant ou après le dernier produit (3') à approvisionner situé en bas de pile.

6. Dispositif d'approvisionnement selon la revendication 5,
**caractérisé en ce que** la butée de produit (5) est liée par l'intermédiaire d'une patte (20) de moyen de transport, de préférence contrainte par traction, avec le moyen de transport (4) ; la butée de produit étant réglable en hauteur au moyen de rampes (15) stationnaires latérales dans la zone du bord latéral du moyen de transport ou au moyen d'un dispositif disposé sur le réservoir de produit au dessus du moyen de transport.

7. Dispositif d'approvisionnement selon la revendication 6,
**caractérisé en ce que** les rampes latérales (15) comportent à chaque fois un aiguillage (16) cadencé réglable qui est, de préférence, une pièce de rampe latéralement déplaçable.

8. Dispositif d'approvisionnement selon une des revendications 1 à 7,
**caractérisé en ce que** deux butées latérales (5) réalisées de façon identique sont prévues pour le dernier produit (3') à approvisionner situé en bas de pile.

9. Dispositif d'approvisionnement selon une des revendications 1 à 8,
**caractérisé en ce que** les réservoirs de produit (2) sont inclinés en direction de transport (F) du moyen de transport (4) par rapport à la verticale.

10. Dispositif d'approvisionnement selon une des revendications 1 à 9,
**caractérisé en ce que** les réservoirs de produit (2) d'un moyen de transport (4) sont disposés en ligne à des distance identiques et / ou **en ce que** la distance (a) des réservoirs de produit (2) est plus petite que la largeur (b) du réservoir de produit.

11. Dispositif d'approvisionnement selon une des revendications 1 à 10,
**caractérisé en ce que** les réservoirs de produit (2) sont inclinés en travers de la direction de transport (F) du moyen de transport (4) par rapport à la verticale.

12. Dispositif d'approvisionnement selon la revendication 11,
**caractérisé en ce que** le réservoir de produit (2) est une tôle verticale doublement inclinée avec un angle de positionnement pour les produits (3) reçus dans le réservoir de produit (2).

13. Dispositif d'approvisionnement selon une des revendications 1 à 12,
**caractérisé en ce que** les réservoirs de produit (2) comportent une fente d'éjection (19) située en direction de transport (F) pour les produits à sortir.

14. Dispositif d'approvisionnement selon la revendication 13,
**caractérisé en ce que** la fente d'éjection latérale (19) est réglable en largeur en direction verticale et est pourvue d'une brosse du côte supérieur ou d'un poussoir de plaques réglable vers le bas du côté supérieur pour éjecter en même temps au moins deux produits empilés hors d'un seul réservoir de produit.

15. Dispositif d'approvisionnement selon une des revendications 1 à 14,
**caractérisé en ce que** plusieurs moyens de transport (4) avec des réservoirs de produits associés (2) sont prévus dans des plans identiques et / ou différents dont les extrémités de transport sont liées avec des moyens de transports transversaux , où on a prévu notamment, des bandes de transports transversales, des moyens de transport intermédiaires inclinés susceptibles d'être traversés par le haut, notamment des bandes de transport intermédiaires (21).

16. Dispositif d'approvisionnement selon une des revendications 1 à 15,
**caractérisé en ce que** un ou plusieurs réservoirs de produit (2) sont réalisés comme des tiroirs ou stores susceptibles d'être déplacés en travers du moyen de transport (4).

17. Dispositif d'approvisionnement selon une des revendications 1 à 16,
**caractérisé en ce que** l'on peut empiler dans un seul champ de produit (6) plusieurs produits éjectés d'un ou plusieurs réservoirs de produit (2).
